**Europäisches Patentamt**

**European Patent Office**

**Office européen des brevets**

(19)

(11) Veröffentlichungsnummer : **0 457 047 B1**

(12)                     **EUROPÄISCHE PATENTSCHRIFT**

(45) Veröffentlichungstag der Patentschrift :
**16.03.94 Patentblatt 94/11**

(51) Int. Cl.⁵ : **C03C 3/087,** C03C 4/08,
C03C 4/00

(21) Anmeldenummer : **91106192.7**

(22) Anmeldetag : **18.04.91**

(54) **Körpergewebeverträgliches Glas.**

(30) Priorität : **12.05.90 DE 4015264**

(43) Veröffentlichungstag der Anmeldung :
**21.11.91 Patentblatt 91/47**

(45) Bekanntmachung des Hinweises auf die
Patenterteilung :
**16.03.94 Patentblatt 94/11**

(84) Benannte Vertragsstaaten :
**BE CH DE DK FR LI NL**

(56) Entgegenhaltungen :
**EP-A- 0 013 650
DE-A- 2 116 155
DE-B- 1 265 360
FR-A- 2 527 758**

(56) Entgegenhaltungen :
**CHEMICAL ABSTRACTS, Band 92, Nr. 16, April
1980, Seite 323, Zusammenfassung Nr.
133960j, Columbus, Ohio, US; & JP-A-54 035
214 (NIPPON ELECTRIC GLASS) 01-11-1979
CHEMICAL ABSTRACTS, Band 88, Nr. 24, 12.
Juni 1978, Seite 356, Zusammenfassung Nr.
175980p, Columbus, Ohio, US; & JP-A-52 102
311 (TOYO GLASS) 27-08-1977**

(73) Patentinhaber : **Schott Glaswerke
Hattenbergstrasse 10
D-55122 Mainz (DE)**

(72) Erfinder : **Ditz, Hermann
Kaitersbergstrasse 18
W-8300 Landshut (DE)**
Erfinder : **Paschke, Hartmut, Dr.
Bargrabenstrasse 11
W-8300 Ergolding (DE)**
Erfinder : **Gaschler, Ludwig
Westring 299
W-6500 Mainz (DE)**

## Beschreibung

Eine Methode zur Gewinnung von Informationen aus Tieren oder über Tiere besteht in der Implantation eines Minisenders oder eines Transponders in den Tierkörper. Transponder bestehen im wesentlichen aus einer Sendeantenne und einem Speicherchip und/oder Sensor oder einem sonstigen Bauelement und gestatten, jederzeit über einen auswärtigen Empfänger den im Speicherchip gespeicherten Code bzw. andere Informationen abzulesen. Derartige Systeme sind als Tierinformations- und -identifizierungssysteme im Handel. Auf diese Weise kann z.B. das Tier identifiziert und sein Standort, seine Körpertemperatur und andere Daten ermittelt und für wissenschaftliche Zwecke, z.B. Bestimmung von Wanderungswegen oder zur Steuerung von Futterautomaten benutzt werden. Die gegen chemische Einflüsse außerordentlich empfindlichen Transponder sind durch eine Kapselung dem Einfluß der Körperflüssigkeiten entzogen. Als Material für die Kapselung sind einige teure oder aufwendig zu bearbeitende Kunststoffe und Glas bekannt. Da die Kapselung z.B. bei der Markierung von Wildtieren lebenslang, d.h. bis zu 30 Jahren im Körper verbleiben muß, bietet sich aufgrund seiner guten Langzeitbeständigkeit, seines niedrigen Preises und seiner guten Verarbeitbarkeit Glas als Kapselmaterial besonders an. Das Einkapseln der Transponder geschieht derart, daß der Transponder in ein einseitig geschlossenes Glasrohr gegeben wird, das dann am anderen Ende abgeschmolzen wird.

Der Nachteil der bisher für diesen Zweck benutzten Gläser besteht vor allem darin, daß das Abschmelzen nur verhältnismäßig umständlich vorgenommen werden kann. Aufgrund der Korrosionsempfindlichkeit des Transponders ist es nötig, ihn nicht nur hermetisch zu kapseln, sondern ihn auch unter Ausschluß von Spuren korrosiver Gase, d.h. in einer Schutzgasatmosphäre oder im Vakuum zu betreiben. Eine Verschmelzung des Glases mittels Flamme scheidet damit aus, da das aus der Verbrennung entstandene Wasser langfristig den Transponder korrodiert.

Die bisher verwendeten Gläser werden daher meist durch die Wärme widerstandsbeheizter Elemente, i.a. durch die sogenannte Wendelverschmelzung verschlossen. Bei der Wendelverschmelzung wird die zur Verschmelzung erforderliche Wärme durch eine elektrisch widerstandsbeheizte glühende Drahtwendel erzeugt. Der Wärmeübergang von der Wendel auf das Glas erfolgt hauptsächlich durch Konvektion. Das hat aber den Nachteil, daß die Verschmelzung verhältnismäßig lange dauert, was zu einer relativ hohen Temperaturbelastung des Transponders während des Einschmelzvorganges und zu großen Taktzeiten, d.h. einer geringen Leistung der Einschmelzmaschine führt. Darüber hinaus besitzt die Wendel nur eine recht begrenzte Lebensdauer.

Es sind auch bereits sogenannte Reed-Gläser bekannt, die zum Einkapseln von Reed-Schaltern dienen und die mittels Infrarotstrahlung, die fokussiert werden kann und auch im Vakuum wirksam ist, verschmolzen werden können. Die Infrarot-Verschmelzung hat den Vorteil, daß durch die mögliche Fokussierung große Energiemengen punktuell konzentriert werden können, so daß sich für die Verschmelzung nur eine kurze Zeit und damit für die eingekapselten Bauteile nur eine geringe Temperaturbelastung ergibt. Diese Reed-Gläser sind jedoch für die Einkapselung von implantierbaren Transpondern nicht geeignet, da sie einen hohen Anteil an toxischen Bestandteilen ($B_2O_3$, BaO, PbO usw.) aufweisen und daher langfristig bedenklich sind.

Die Aufgabe der Erfindung besteht darin, ein Glas zu finden, das für die Infrarot-Verschmelzung geeignet ist und bei dem der Anteil an toxischen Bestandteilen ganz entfällt oder zumindest so gering gehalten wird, daß er physiologisch unbedenklich ist.

Diese Aufgabe wird durch das in dem Patentanspruch 1 beschriebene Glas gelöst.

Der Gehalt an $SiO_2$ in dem Glas liegt zwischen 65 Gew.-% und 68 Gew.-%. Unterschreitet man die Grenze von 65 Gew.-%, so nimmt die chemische Beständigkeit ständigkeit ab und die Gefahr der Kristallisation bei der Herstellung von Rohren zu. Ein Gehalt von über 68 Gew.-% führt zu einer hohen Verschmelztemperatur und Viskosität, ferner zu einem hohen Energiebedarf beim Einschmelzen des Glases.

Die Alkalioxide dienen der Herabsetzung der Viskosität und der Erweichungstemperatur. Der Alkalioxid-Gehalt darf jedoch auch nicht zu hoch werden, da sonst die chemische Beständigkeit des Glases zu gering wird. Der Alkalioxidgehalt soll daher insgesamt zwischen 15 und 17 Gew.-% liegen. Als Alkalioxid bevorzugt wird $Na_2O$, das in Mengen von 12,0 - 14,0 Gew.-%, verwendet wird. Das Glas kann ferner 2,5 bis 4 Gew.-% $K_2O$ enthalten. Bei Gehalten von über 4 Gew.-% $K_2O$ macht sich dessen negativer Einfluß auf die Erweichungstemperatur bereits störend bemerkbar. Lithiumoxid kann in Mengen von bis zu 3 Gew.-% in dem Glas vorhanden sein. Im Vergleich zu $Na_2O$ und $K_2O$ wirkt $Li_2O$ stärker viskositätssenkend, jedoch sollte eine Menge von 3 Gew.% nicht überschritten werden, da sonst eine zu starke Kristallisationsneigung und schlechte chemische Beständigkeit vorliegen. In den meisten Fallen wird man jedoch wegen des hohen Preises auf einen $Li_2O$-Gehalt in dem Glas ganz verzichten.

Als Erdalkalioxide finden insbesondere CaO in Mengen von 4,2 - 5,5 Gew.-% und MgO in Mengen von 2-3,24 Gew.-% Verwendung. Ihr Zusatz dient der Verbesserung der chemischen Stabilität des Glases. Bei Unterschreitung der angegebenen Bereiche vermindert sich die chemische Stabilität, wohingegen bei Überschreitung die Erweichungstemperatur ansteigt, was zu einer Erhöhung der Temperaturbelastung der einzuschmelzenden Bauteile führt. Barium-Ionen sind toxisch. Der Gehalt an BaO sollte daher möglichst gering sein und unter 2 Gew.-% liegen, wobei aus prophylaktischen Gründen ein völliger Wegfall des BaO-Anteils angestrebt wird. Dennoch ist mitunter ein BaO-Zusatz sinnvoll, da durch BaO die Viskosität des Glases abgesenkt werden kann, was zu einer Schonung der einzuschmelzenden Materialien in thermischer Hinsicht führt, wobei BaO-Konzentration von 2 Gew.-% und weniger keine toxischen Reaktionen mehr hervorrufen.

Aluminiumoxid ist in Mengen zwischen 3 und 4 Gew.-% vorhanden und dient der Verbesserung der chemischen Stabilität des Glases. Bei Überschreitung dieses Bereichs nehmen allerdings die Verschmelztemperatur und die Viskosität stark zu, so daß die einzuschmelzenden Materialien Gefahr laufen, thermisch geschädigt zu werden. Besonders günstige Eigenschaften, sowohl hinsichtlich der chemischen Stabilität als auch hinsichtlich der Verschmelztemperatur, erreicht man innerhalb des genannten Bereichs.

$B_2O_3$ gehört ebenfalls zu den Glasbestandteilen, die toxische Ionen freisetzen können. Sein Gehalt in dem Glas beträgt höchstens 1 Gew.-%. Mit $B_2O_3$ läßt sich die chemische Beständigkeit des Glases verbessern, dennoch sollte der Gehalt an diesem Glasbestandteil so gering wie möglich gehalten werden.

Der Gehalt an Eisenoxid (FeO) ermöglicht die Infrarotverschmelzbarkeit des Glases. Das 2-wertige Eisenoxid soll in einer Menge vorliegen, daß die Infrarotstrahlung in dem zu verschmelzenden Glas bei dem Verschmelzvorgang weitgehend absorbiert wird und Absorption möglichst gleichmäßig über die Schichtdicke des Glases erfolgt. Ist die Konzentration an Eisen (II)-Ionen zu niedrig, so ist die Absorption zu gering, was zu längeren Verschmelzzeiten führt. Ist die Konzentration zu hoch, erfolgt die Absorption der Strahlung bereits in den oberflächennahen Schichten. Die tieferen Schichten müssen dann durch Wärmeleitung von den oberflächennahen Schichten erwärmt werden, was ebenfalls zu längeren Verschmelzzeiten führt. Längere Verschmelzzeiten führen aber aufgrund der Wärmeleitung des Glases zu einer stärkeren thermischen Belastung des einzuschmelzenden Materials. Gute Ergebnisse erzielt man bei den üblichen Wandstärken von Transponderröhrchen oder Ampullen von 0,1 bis 1 mm, wenn die Transmission des Glases bei einer Schichtdicke von 1 mm und einer Wellenlänge von $\lambda$ = 1060 nm zwischen 2 % und 20 % liegt. Das ist bei FeO-Konzentration von 2,7 bis 4,1 Gew.-% der Fall. Je dünner die Wandstärke des zu verschmelzenden Glases ist, desto stärker soll die Absorption und damit verbunden desto höher der FeO-Gehalt sein. Falls beim Erschmelzen des Glases das Eisen in Form von $Fe_2O_3$ zugegeben wird, ist durch eine geeignete Schmelzführung sicherzustellen, daß eine ausreichende Menge des Fe (III) zu Fe (II) reduziert wird, um die genannten FeO-Anteile im Glas zu erhalten. Jedoch sollte der Gesamt-Eisengehalt, als $Fe_2O_3$ gerechnet, wegen der Entmischungstendenz 7 Gew.-% nicht übersteigen.

Das gefundene Glas ist durch den extrem abgesenkten Gehalt an toxischen Bestandteilen physiologisch unbedenklich und besitzt eine ausgezeichnete Gewebeverträglichkeit. Es besitzt eine gute Stabilität, so daß es problemlos auf Rohrzugmaschinen zu Rohr verarbeitet werden kann. Aufgrund seiner Infrarotverschmelzbarkeit ist es ausgezeichnet geeignet zum schonenden und schnellen Einkapseln von Transpondern und anderen zu implantierenden Materialien und als Ampullenmaterial zum Abfüllen enpfindlicher Materialien.

Beispiele

Die in der Tabelle 1 angeführten Gläser (Angaben der Zusammensetzung in Gew.-% auf Oxidbasis) wurden aus herkömmlichen Glasausgangsmaterialien erschmolzen. Ferner wurde die Verarbeitungstemperatur Va angegeben, d.h. die Temperatur, bei der das Glas eine Viskosität von $10^4$ dPas besitzt. Zur Demonstration der geringeren Temperaturbelastung wird aus dem Glas Nr. 1 ein einseitig (am Boden) verschlossenes Transponderröhrchen mit einem Außendurchmesser von 2,1 mm und einer Wandstärke von 0,25 mm hergestellt. Zum Vergleich wurde ein bisher zum Einschmelzen von Transpondern eingesetztes Glas gleicher Dimension verwendet. Die Röhrchen wurden vor dem einseitigen Verschließen mit einem Thermoelement versehen, das 10 mm unterhalb der geplanten Abschmelzstelle angeordnet wurde. Die Anschlußdrähte wurden durch den Boden nach außen geführt. Die Röhrchen wurden nun 20 mm oberhalb des Bodens in den Brennpunkt eines fokussierten IR-Lichtstrahls (Leistung des Infrarotstrahlers 110 W) bzw. in das Zentrum einer Glühwendel (Wendeldurchmesser 7 mm, Leistung 110 W) gebracht. Die zum Zuschmelzen benötigte Zeit und die dabei am Thermoelement gemessene maximale Temperatur sind in der Tabelle 2 angegeben.

T a b e l l e    1

|            | 1     | 2     | 3     |
|------------|-------|-------|-------|
| $SiO_2$    | 65,2  | 66,5  | 67,36 |
| $Li_2O$    | -     | -     | -     |
| $Na_2O$    | 12,48 | 13,0  | 12,48 |
| $K_2O$     | 3,23  | 3,0   | 3,23  |
| $\Sigma$ Alkalioxid | 15,71 | 16,0 | 15,71 |
| MgO        | 3,24  | 2,5   | 2,65  |
| CaO        | 5,05  | 4,8   | 4,68  |
| BaO        | 2,00  | 1,9   | 1,00  |
| $Al_2O_3$  | 4,00  | 3,6   | 4,00  |
| $B_2O_3$   | 1,00  | 0,9   | 0,5   |
| FeO        | 3,80  | 3,4   | 4,10  |
| Va (°C)    | 990   | 980   | 1010  |

T a b e l l e    2

|                | Verschmelzzeit | T. max. | Bemerkung |
|----------------|----------------|---------|-----------|
| **IR-Strahlung** | | | |
| Glas Nr. 1     | 5 sec.         | 90°C    |           |
| Vergleichsglas | -              | 150°C   | nach 60 sec. noch keine Verschmelzung |
| **Wendelheizung** | | | |
| Glas Nr. 1     | 18 sec.        | 85°C    |           |
| Vergleichsglas | 30 sec.        | 150°C   |           |

**Patentansprüche**

1. Körpergewebeverträgliches Glas in Gew.-% auf Oxidbasis bestehend aus

4

| | | | |
|---|---|---|---|
| 65 | – | 68 | $SiO_2$ |
| 0 | – | 3 | $Li_2O$ |
| 12,0 | – | 14,0 | $Na_2O$ |
| 2,5 | – | 4,0 | $K_2O$ |
| 15 | – | 17 | $\Sigma$ Alkalioxid |
| 2 | – | 3,24 | $MgO$ |
| 4,2 | – | 5,5 | $CaO$ |
| 0 | – | 2 | $BaO$ |
| 3 | – | 4 | $Al_2O_3$ |
| 0 | – | 1,0 | $B_2O_3$ |
| 2,7 | – | 4,1 | $FeO$ |

2. Verwendung des Glases nach den Ansprüchen 1 oder 2 als körpergewebeverträgliches Kapselmaterial für Implantatzwecke.

3. Verwendung des Glases nach den Ansprüchen 1 oder 2 zur Herstellung von mittels Infrarotstrahlung verschließbaren Ampullen.

**Claims**

1. Biocompatible glass comprising, in % by weight based on oxide,

| | | | |
|---|---|---|---|
| 65 | – | 68 | $SiO_2$ |
| 0 | – | 3 | $Li_2O$ |
| 12.0 | – | 14.0 | $Na_2O$ |
| 2.5 | – | 4.0 | $K_2O$ |
| 15 | – | 17 | $\Sigma$ alkali metal oxide |
| 2 | – | 3,24 | $MgO$ |
| 4.2 | – | 5.5 | $CaO$ |
| 0 | – | 2 | $BaO$ |
| 3 | – | 4 | $Al_2O_3$ |
| 0 | – | 1.0 | $B_2O_3$ |
| 2.7 | – | 4.1 | $FeO$ |

2. Use of the glass according to Claim 1 as a biocompatible encapsulation material for implant purposes.

3. Use of the glass according to Claim 1 or 2 for the production of ampoules which can be sealed by means of infra-red radiation.

**Revendications**

1. Verre bio-compatible à base d'oxydes comprenant en pourcents du poids:

| | | |
|---|---|---|
| 65 | – 68 | $SiO_2$ |
| 0 | – 3 | $LiO_2$ |
| 12,0 | – 14,0 | $Na_2O$ |
| 2,5 | – 4,0 | $K_2O$ |
| 15 | – 17 | $\Sigma$ oxydes alcalins |
| 2 | – 3,24 | $MgO$ |
| 4,2 | – 5,5 | $CaO$ |
| 0 | – 2 | $BaO$ |
| 3 | – 4 | $Al_2O_3$ |
| 0 | – 1,0 | $B_2O_3$ |
| 2,7 | – 4,1 | $FeO$ |

2. Utilisation du verre selon la revendication 1 comme matériau bio-compatible pour des capsules destinées à être implantées.

3. Utilisation du verre selon la revendication 1 ou 2 pour fabriquer des ampoules peuvant être fermées par rayonnement infrarouge.